# EUROPÄISCHE PATENTSCHRIFT

(11) **EP 1 001 888 B1**
(45) Veröffentlichungstag und Bekanntmachung des Hinweises auf die Patenterteilung: **08.05.2002**
(21) Anmeldenummer: 98945156.2
(22) Anmeldetag: 06.08.1998
(51) Int. Cl.: B60N 2/08

(54) **Verriegelungsvorrichtung für Fahrzeugsitze, insbesondere Kraftfahrzeugsitze**
Locking device for vehicle seats, in particular motor vehicle seats
Dispositif de verrouillage pour sièges, en particulier pour sièges de véhicules à moteur

(30) Priorität: 13.08.1997 DE 19735030
(43) Veröffentlichungstag der Anmeldung: 24.05.2000
(73) Patentinhaber: Keiper GmbH & Co., 67657 Kaiserslautern (DE)
(72) Erfinder: SCHÜLER, Rolf, D-42579 Heiligenhaus (DE); FLICK, Joachim, D-42499 Hückeswagen (DE); HENRICH, Wolfgang, D-67808 Schweisweiler (DE); LEIBELING, Christoph, D-53721 Siegburg (DE)
(74) Vertreter: Patentanwälte Bartels und Partner
(86) Internationale Anmeldenummer: EP9804908
(87) Internationale Veröffentlichungsnummer: WO9908892

(56) Entgegenhaltungen:
- EP-A- 0 786 371
- WO-A-95/17317
- WO-A-96/11123
- DE-A- 4 432 861
- DE-C- 4 242 895

## Beschreibung

Die Erfindung betrifft eine Verriegelungsvorrichtung für Fahrzeugsitze, insbesondere Kraftfahrzeugsitze mit den Merkmalen des Oberbegriffs der Patentansprüche 1 und 2.

Durch die PCT/WO 95/17317 ist eine dahingehende Verriegelungsvorrichtung für Fahrzeugsitze bekannt. Mit der bekannten Verriegelungsvorrichtung ist es möglich, zwei verstellbare Teile des Fahrzeugsitzes relativ zueinander stufenlos zu verstellen, wobei auch im Falle einer erhöhten Belastung eine sichere Verriegelung dem Grunde nach realisiert ist.

Bei der bekannten Lösung weisen die Sperrzähne, bedingt durch schräg angeordnete Eingriffsflächen, eine Keilform auf, wobei vorgesehen ist, daß die geneigten Flächen in eine Richtung quer zur Verstellrichtung weisen mit der Folge, daß eine Belastung mindestens eines der beiden relativ zueinander bewegbaren Teile in der Verstellrichtung allenfalls eine so geringe Kraftkomponente an den Sperrzähnen im Sinne eines Lösens der Verriegelung zur Folge hat, daß es in der Regel zu keiner unfreiwilligen Entriegelung kommen kann. Es hat sich jedoch gezeigt, daß bei einer sehr ungünstigen Krafteinleitung, wie sie beispielsweise in einem Crashfall mit hochfrequenten Schwingungsanteilen auftreten kann, der jeweilige Sperrzahn aus seiner Sperrstellung gehoben wird und dadurch eine partielle Längsverschiebung entstehen kann, bis der nächste Sperrzahn die Last aufnehmen kann.

Durch die EP-A-0 786 371 ist eine Vorrichtung zur manuellen Längsverstellung eines Fahrzeugsitzes bekannt, welche einen Führungsrahmen, ein darin vertikal verschiebbares Sperrglied und innerhalb einer Öffnung im Sperrglied einen schwenkbaren Verriegelungshebel aufweist. Das Sperrglied ist nach unten mit einer Verzahnung versehen, welche durch eine Öffnung im Führungsrahmen nach unten ragt und mit einer entsprechenden Verzahnung einer Unterschiene in Eingriff steht. Der Führungsrahmen ist an einer Oberschiene befestigt und dient als Anschlag für zwei Federn, welche das Sperrglied bzw. den Verriegelungshebel auf die Verriegelungsstellung hin beaufschlagen. Mit der bekannten Lösung ist es nur möglich, eine Vielzahl von Sperrzähnen im Sinne von Zahnleisten miteinander in oder außer Eingriff zu bringen zum Herbeiführen einer Verriegelungs- bzw. Entriegelungsstellung. Auch hier besteht insbesondere bei hochfrequenten Schwingungsanteilen im Crashfall die Möglichkeit des Versagens der angesprochenen Verriegelung.

Durch die PCT/WO 96/11123 ist eine gattungsgemäße Verriegelungsvorrichtung bekannt, bei der die Gefahr, daß die Sperrzähne unbeabsichtigt, beispielsweise infolge einer Überlast, aus den Rastöffnungen austreten, dadurch beseitigt ist, daß die belastete Fläche des letztlich die Belastung aufnehmenden Teils des Sperrzahnes, also die Mantelfläche des in die Rastöffnungen eingreifenden Endabschnittes des jeweiligen bolzenartig ausgebildeten Sperrzahnes od. dgl., parallel zur Einfallrichtung verläuft und deshalb die Belastungskräfte, welche auf die Sperrzähne wirken, keine Komponente in der Einfallrichtung ergeben, was hohe Anforderungen an eine paßgenaue Konstruktion stellt. Zusätzlich kann jeder Sperrzahn formschlüssig gegen eine Bewegung aus der Verriegelungsstellung heraus mittels eines Rückhaltemittels gesichert sein, das für jeden Sperrzahn aus einem quer zu dessen Verschieberichtung bewegbaren Blockierelement besteht, das in seiner Sperrstellung an dem der Rastöffnung abgekehrten Ende des Sperrzahnes anliegt.

Die dahingehend bekannte Lösung setzt voraus, daß der jeweilige Sperrzahn definiert in seine verrastende Endstellung gebracht ist, da nur dann eine Blockierung des Sperrzahnes über das Rückhaltemittel möglich ist. Kommt es zu einem in der Höhe unterschiedlichen Eingriff von Sperrzähnen in die zugeordnete Rastöffnung, findet also kein paßgenauer vollständiger Eingriff in die die Schiene verriegelnde Endstellung durch die Sperriegel statt, so daß eine Blockierung der dahingehenden Sperriegel über das Rückhaltemittel nicht mehr möglich ist, was die Funktionssicherheit der bekannten Verriegelungsvorrichtung insbesondere im Crashfall, wo Belastungen mit hochfrequenten Schwingungsanteilen auftreten, beeinträchtigen kann.

Ausgehend von diesem Stand der Technik liegt der Erfindung die Aufgabe zugrunde, die vorbeschriebenen Verriegelungsvorrichtungen dahingehend weiter zu verbessern, daß ein ungewolltes Außereingriffbringen des jeweiligen Sperrzahnes aus einer wirksamen Stellung, insbesondere im Crashfall mit hochfrequenten Schwingungsanteilen verhindert ist, selbst dann, wenn der jeweilige Sperrzahn nicht in seiner voll verriegelnden, eingreifenden Endposition ist. Eine dahingehende Aufgabe löst eine Verriegelungsvorrichtung mit den Merkmalen des Patentanspruches 1 sowie mit den Merkmalen des Patentanspruches 2.

Dadurch, daß gemäß dem kennzeichnenden Teil des Patentanspruches 1 die Fangeinrichtung aus einem Paar an Federzungen gebildet ist, die eine Eingriffsöffnung für den Sperrzahn begrenzen und die mit ihren freien Federenden für eine Anlage mit dem Sperrzahn vorgesehen sind, ist es mit dieser Anordnung möglich, daß bei einer etwaigen Aushebebewegung im Bereich einer noch wirksamen Sperrstellung der Sperrzahn durch die Zustellkraft der Federzungen eine solche Gegenkraft erfährt, daß ein Ausheben dadurch verhindert wird.

Die vorstehend angegebene Aufgabe wird auch dadurch gelöst, daß gemäß dem kennzeichnenden Teil des Patentanspruches 2 die Fangeinrichtung aus einem Fanghaken gebildet ist, der von dem Zinken der Betätigungseinrichtung und der Druckfeder angesteuert zwischen einer gelösten Stellung und einer Verriegelungsstellung bewegbar ist, bei der der Sperrzahn in einer noch wirksamen Sperrstellung blockiert ist. Dadurch ist eine Verbindung gegeben, mit der besonders hohe Haltekräfte auf den Sperrzahn im Sinne einer blockierenden, noch wirksamen Sperrstellung ausübbar sind.

Beide Lösungen erlauben, daß die Fangeinrichtung rechtzeitig den jeweiligen Sperrzahn abfängt und in einer noch wirksamen Sperrstellung hält. Somit ist auch gewährleistet, daß im Crashfall mit hochfrequenten Schwingungsanteilen sicher eine Verriegelung stattfindet, da die Sperrzähne bei einer etwaigen Aushebebewegung aus ihrer Verriegelungs- oder Sperrstellung derart eingefangen werden, daß sie noch in einer wirksamen Sperrstellung verbleiben, wobei gleichzeitig in Richtung dieser Sperrstellung über die Fangeinrichtung eine zusätzliche Haltekraft ausgeübt werden kann. Unabhängig von der jeweiligen Eingriffssituation und mithin der Eingriffshöhe des jeweiligen Sperrzahnes ist ein verriegelnder Fangvorgang ermöglicht, so daß ein ungewollter Aushebevorgang des Sperrzahnes auch dann verhindert ist, wenn dieser im Gegensatz zum Stand der Technik nicht vollständig seine sperrende Endstellung erreicht hat.

Weitere vorteilhafte Ausführungsformen der Verriegelungsvorrichtung sind Gegenstand der Unteransprüche.

Im folgenden wird anhand der Zeichnung die Verriegelungsvorrichtung näher erläutert.
Es zeigen in prinzipieller und nicht maßstäblicher Darstellung die
- Fig.1: eine stirnseitige Darstellung auf die Verriegelungsvorrichtung;
- Fig.2: eine Draufsicht auf einen Ausschnitt der Schiene;

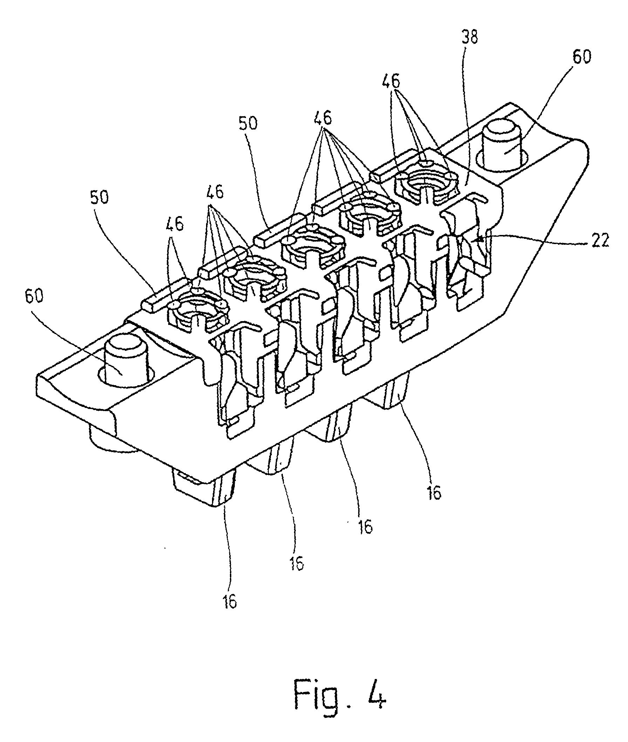

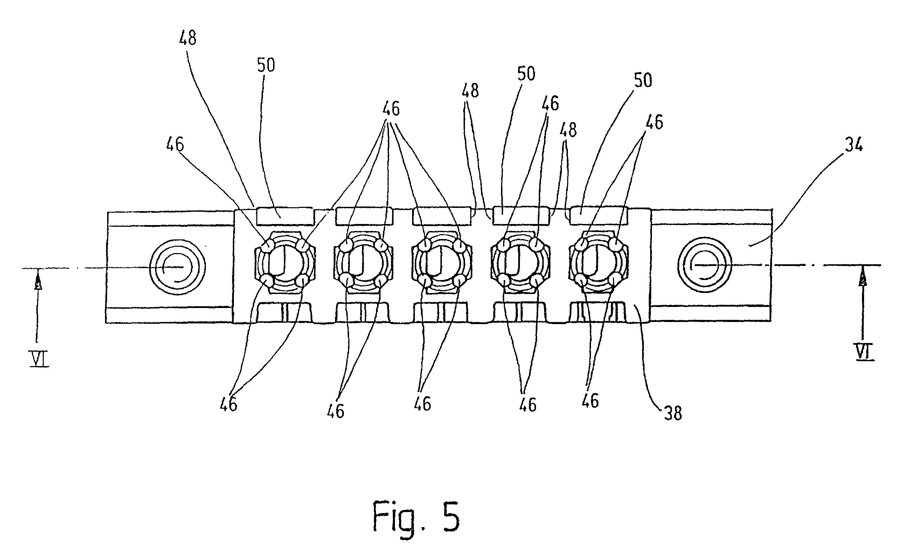

- Fig.3, 4 und 5: eine seitliche, perspektivische sowie eine Draufsicht auf eine erste Ausführungsform der Verriegelungsvorrichtung;

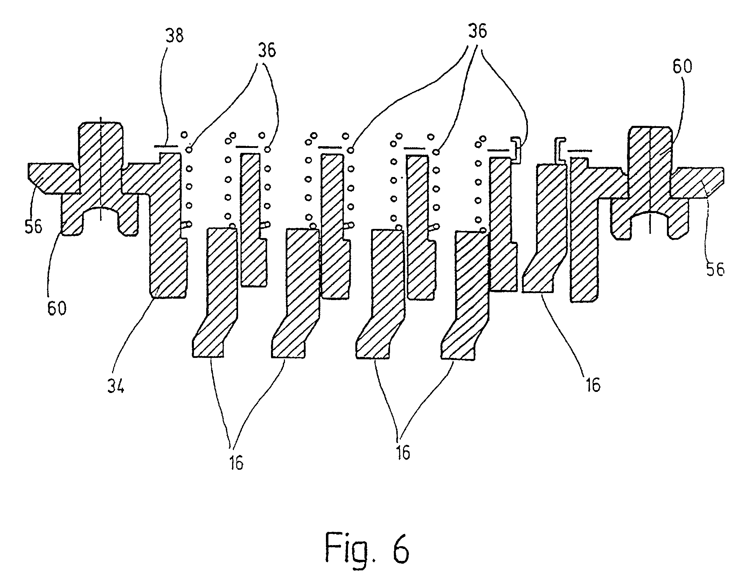

- Fig.6: einen Schnitt längs der Linie VI - VI in Fig.5;
- Fig.7: in der Art einer Zusammenbauzeichnung eine perspektivische Ansicht auf die Verriegelungsvorrichtung nach den Fig.3 bis 5;
- Fig.8: eine seitliche Ansicht des Rückhaltemittels gemäß der ersten Ausführungsform;
- Fig.9a - d: in verschiedenen Ansichten ein Rückhaltemittel gemäß der zweiten Ausführungsform;
- Fig.10: eine stirnseitige Darstellung auf die Verriegelungsvorrichtung nach der zweiten Ausführungsform.

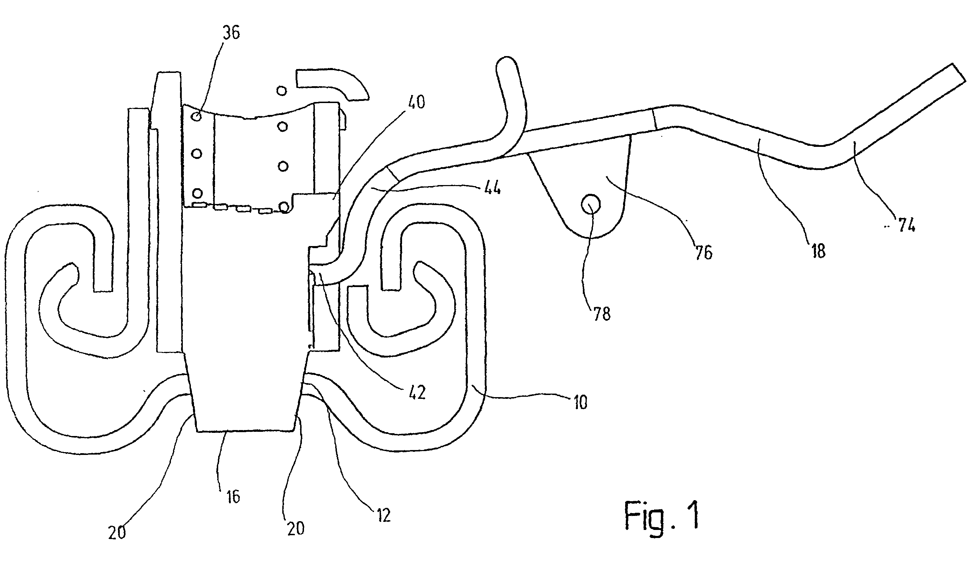

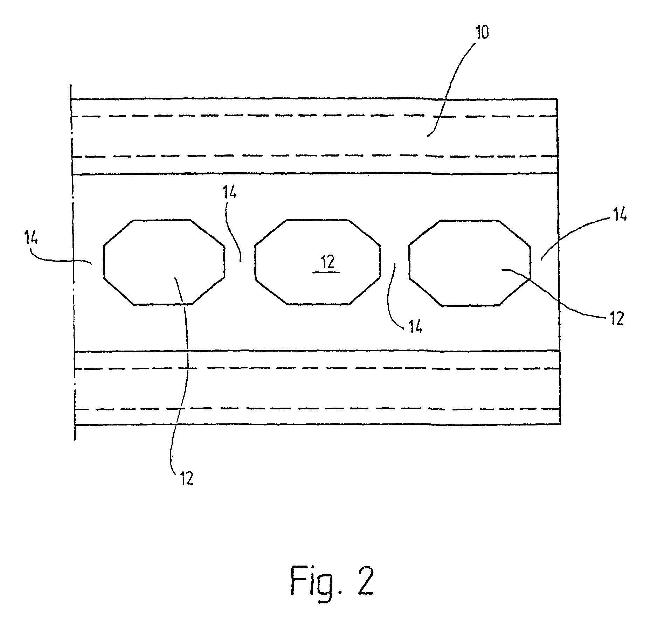

Wie die Fig.1 zeigt, weist die Verriegelungsvorrichtung für Fahrzeugsitze, insbesondere Kraftfahrzeugsitze, zwei relativ zueinander verstellbare Teile auf mit einer dem einen Teil zugeordneten, sich in der Verstellrichtung erstreckenden Schiene 10, die eine sich in Schienenlängsrichtung erstreckende Reihe von Rastöffnungen 12 (vgl. Fig.2) aufweist, die durch stegartige Materialpartien 14 voneinander getrennt sind. Dem anderen gegebenenfalls ebenfalls schienenartig ausgebildeten Teil sind Sperrzähne 16 zugeordnet, die quer zur Erstreckungsrichtung der Schiene 10 relativ zu dieser zwischen einer Freigabestellung und einer Sperrstellung beweglich sowie über eine Betätigungsvorrichtung 18 ansteuerbar sind und von denen in der Sperrstellung der relativ zueinander verstellbaren Teile mindestens zwei in eine jeweils zugeordnete Rastöffnung 12, wie in der Fig.1 dargestellt, eingreift, die sich auf die Sperrstellung der Verriegelungsvorrichtung bezieht. Für den Eingriff der jeweils zugeordneten Rastöffnung 12 weisen die Sperrzähne 16 Eingriffsflächen 20 auf, die schräg angeordnet eine Keilform für den jeweiligen Sperrzahn 16 bilden.

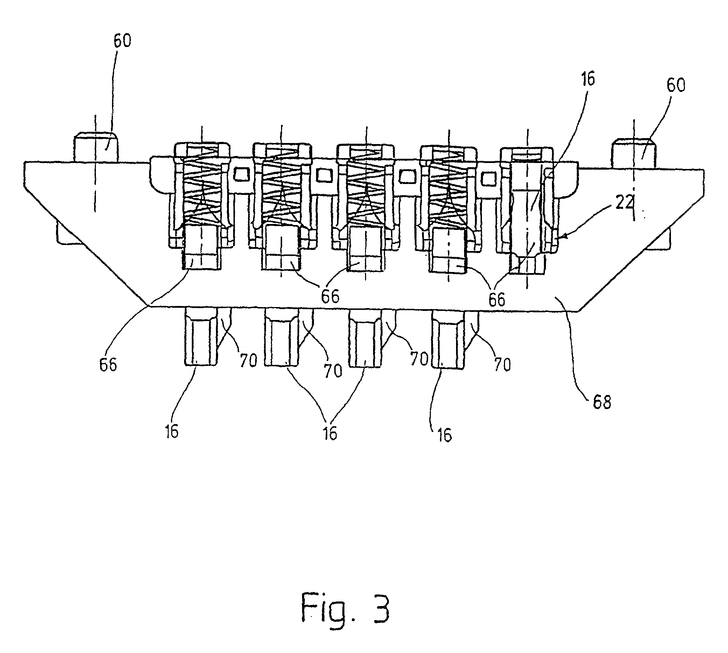

Des weiteren weist die Verriegelungsvorrichtung Rückhaltemittel auf, die ein ungewolltes Außereingriffbringen des jeweiligen Sperrzahnes 16 aus einer wirksamen Sperrstellung verhindern. Das jeweilige Rückhaltemittel ist dabei aus einer Fangeinrichtung 22 (Fig.3,8,9) gebildet, die kraft- und/oder formschlüssig auf den zugeordneten Sperrzahn 16 einwirkt. Gemäß der zunächst vorgestellten einen Ausführungsform der Verriegelungsvorrichtung ist die Fangeinrichtung 22 aus einem Paar an Federzungen 24 gebildet, die eine Eingriffsöffnung 26 für den Sperrzahn 16 begrenzen und die mit ihren freien Federenden für eine Anlage mit dem Sperrzahn vorgesehen sind. Kommt es hierbei bei hohen Belastungen, insbesondere im Crashfall mit hochfrequenten Schwingungsanteilen, zu einer Bewegung eines Sperrzahnes 16 in Richtung seiner Freigabestellung, wird eine Gegenkraft auf den Sperrzahn ausgeübt, und zwar in Richtung seiner wirksamen Verriegelungsstellung.

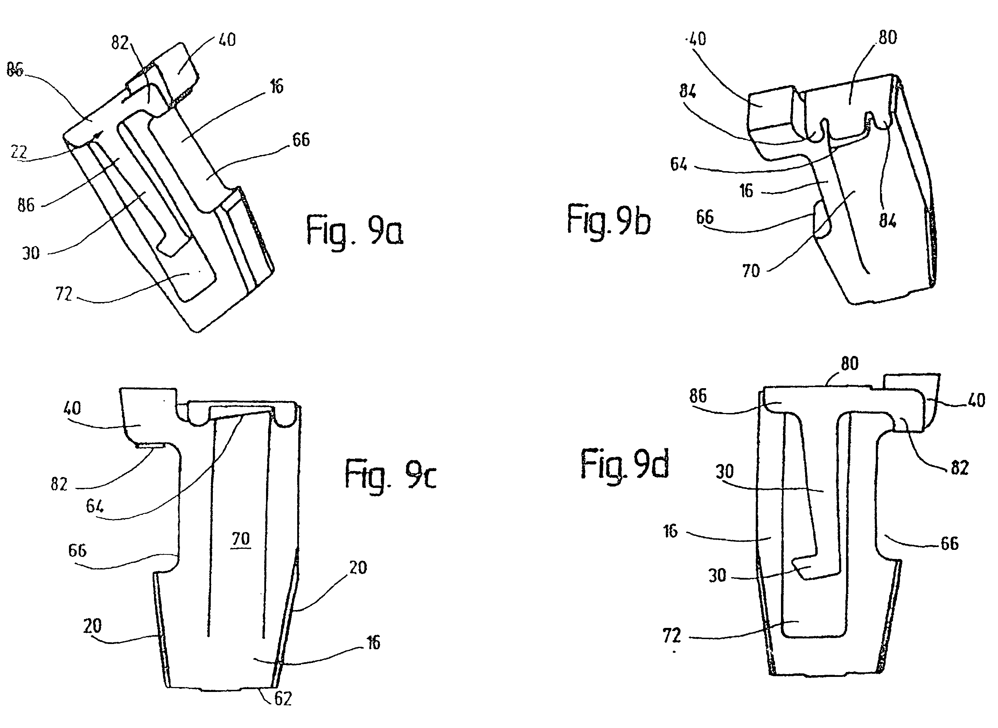

Bei einer anderen Ausführungsform der Verriegelungsvorrichtung gemäß der Darstellung nach den Fig.9a bis 9d ist die Fangeinrichtung 22 aus einem Fanghaken 30 gebildet, der von dem Zinken der Betätigungseinrichtung und einer Druckfeder angesteuert zwischen einer gelösten Stellung und einer Verriegelungsstellung bewegbar ist, bei der der Sperrzahn 16 in einer noch wirksamen Sperrstellung blockiert ist, wobei die Blockierung sich ohne weiteres wieder lösen läßt. Auf nähere Einzelheiten wird hierzu noch später eingegangen werden.

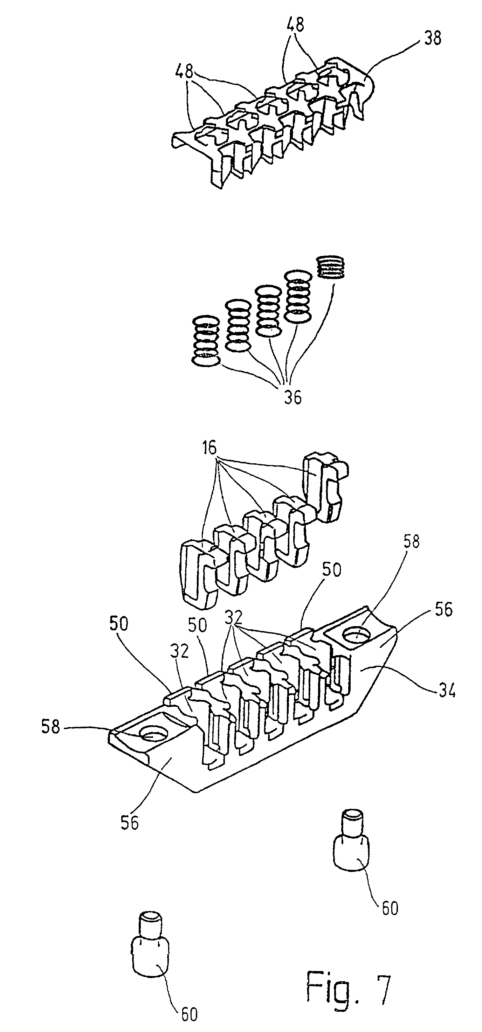

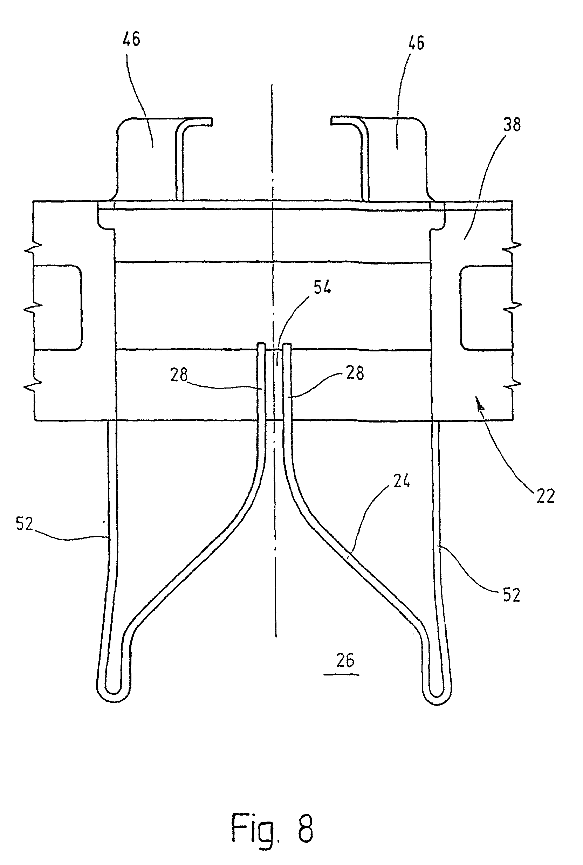

Die einzelnen Sperrzähne 16 sind mit einem axialen Abstand voneinander in Führungen 32 eines Gehäuses 34 geführt, die quer zur Schienenlängsrichtung verlaufen, wobei die Sperrzähne 16 über jeweils einen Federspeicher in Form einer Druckfeder 36 in Richtung ihrer Sperrstellung gehalten sind. Die jeweilige Druckfeder 36 stützt sich dabei mit ihrem einen Ende an einem Deckblech 38 des Gehäuses 34 ab und mit ihrem anderen Ende an dem Sperrzahn 16 oder an Teilen der Fangeinrichtung 22 gemäß der Darstellung nach den Fig-9a-ff. Wie insbesondere die Fig.7 und 8 zeigen, ist dabei das jeweilige Federzungenpaar 24 Teil des Deckbleches 38 und einstückig mit diesem verbunden. Zum Ansteuern der Sperrzähne 16 weisen diese auf ihrer der Betätigungsvorrichtung 18 (Fig.1) zugewandten Seite jeweils einen Steuernocken 40 auf, der von den vorstehenden Zinken 42 eines Steuerkammes 44 der Betätigungsvorrichtung 18 ansteuerbar ist.

Das Deckblech 38 läßt sich aus einem ebenen Blechzuschnitt ausschneiden oder ausstanzen und somit herstellen, wobei durch entsprechendes Umbiegen und Umwalzen die Außenkontur des Deckbleches 38 entsteht. Das Deckblech 38 weist auf seiner den Sperrzähnen 16 gegenüberliegenden Seite paarweise einander diametral gegenüberliegende Haltehaken 46 auf, die mit ihren hakenförmigen Vorständen eine Anlagefläche für das eine freie Ende der jeweiligen Druckfeder 36 ausbilden. Das Deckblech 38 weist darüber hinaus an seiner den Federzungenpaaren 24 gegenüberliegenden Seite Ausnehmungen 48 auf, die dem Durchgriff von feststehenden Gehäuseteilstegen 50 dienen, was das Festlegen des Deckbleches 38 auf dem ihm zugeordneten Gehäuse 34 erleichtert.

Auf der Unterseite des im Querschnitt im wesentlichen U-profilartigen Deckbleches 38 sind einstückig zungenartige Vorsprünge 52 angelascht, die gleiche Länge aufweisen, die paarweise aufeinander zu gebogen sind, wie dies insbesondere die Fig.8 zeigt, und die Eingriffsöffnungen 26 für den Steuernocken 40 eines Sperrzahnes 16 begrenzen, indem sie in Richtung der Haltehaken 46 einfach eingebogen werden. Die Federenden 28 eines Federzungenpaares 24 können dabei in unbetätigtem Zustand kraftschlüssig aneinanderliegen oder, wie in der Fig.8 gezeigt, unter Verjüngung der Eingriffsöffnung 26 einen Durchgriffsspalt 54 begrenzen.

In den Darstellungen nach den Figuren befinden sich alle Sperrzähne 16 in ihrer die Schiene 10 verriegelnden Sperrstellung, wobei in Blickrichtung auf die Figuren gesehen der äußerst rechte Sperrzahn 16 in seiner nicht sperrenden Freigabestellung gezeigt ist. Auf seiner Oberseite schließt das Gehäuse 34 im wesentlichen bündig mit dem mittig auf ihm angeordneten Deckblech 38 ab, wobei das Gehäuse 34 in seiner Längsrichtung gesehen beidseitig nach unten hin, also in Richtung der freien Enden der Sperrzähne 16, sich konisch verjüngende Flankenteile 56 aufweist, die mit Bohrungen 58 versehen sind, die dem Durchgriff zweier Schrauben 60 dienen zwecks Festlegen des Gehäuses 34 an der Gleitschiene.

Der Aufbau der einzelnen Sperrzähne 16 ergibt sich insbesondere aus der Darstellung nach den Fig. 9a-ff. Die einander zugewandten Eingriffsflächen 20 des jeweiligen Sperrzahnes 16 begrenzen zu ihrem freien Ende hin eine ebene Abschlußfläche 62. Dieser Abschlußfläche 62 gegenüberliegend weist der Sperrzahn 16 eine Anlagefläche 64 auf, die bei der zunächst beschriebenen ersten Ausführungsform entgegen der Darstellung nach den Fig. 9a-ff parallel und in gleicher Ausrichtung zur Abschlußfläche 62 verläuft. In Verlängerung der Anlagefläche 64 und diese zumindest nach einer Seite hin vorstehend übergreifend schließt sich der jeweilige Steuernocken 40 an, der zwischen sich und der ihm zugeordneten Eingriffsfläche 20 einen U-artigen Eingriffsraum 66 begrenzt, der bei eingesetzten Sperrzähnen 16 im Gehäuse 34 von einer in Schienenlängsrichtung verlaufenden Querstegfläche 68 des Gehäuses 34 durchgriffen ist.

Als weitere Führungshilfe für das Verfahren des jeweiligen Sperrzahnes 16 in dem Gehäuse 34 weist dieser eine Hilfsstegfläche 70 auf, die zumindest teilweise an der angegebenen Stelle zu einer Verbreiterung des Sperrzahnes 16 führt und Führungsflächen ausbildet für den Eingriff in die zugeordneten Führungsausnehmungen innerhalb des Gehäuses 34, die stegartige, verbreiterte Ausnehmungen innerhalb der Führungen 32 bilden. Die jeweilige Hilfsstegfläche 70 eines jeden Sperrzahnes 16 kann auch in der Art einer Ausprägung gefertigt sein, so daß gegenüberliegend eine entsprechende Kanalführung 72 erzeugt ist, die innerhalb des Sperrzahnes 16 verläuft.

Wie insbesondere die Fig.3 in Verbindung mit der Fig.1 zeigt, verbleibt zwischen Steuernocken 40 und der zugewandten Oberseite der Querstegfläche 68 des Gehäuses 34 noch ein Restraum, in den der jeweils zugeordnete Zinken 42 der Betätigungsvorrichtung 18 eingreifen kann. Wird die Anlenkstange 74 von Hand oder von einem entsprechenden Antrieb angesteuert, um die angelaschte Achsenführung 76 und mithin um die Drehachse 78 verschwenkt, hebt der jeweilige Zinken 42 den zugeordneten Sperrzahn 16 am Steuernocken 40 an, so daß dieser entgegen der Federkraft der Druckfeder 36 in seine Freigabestellung und mithin in Richtung des Inneren des Gehäuses 34 bewegt wird. Wird die Anlenkstange 74 losgelassen, sorgen die Druckfedern 36 für die entsprechende Rückstellbewegung in die Ausgangsstellung und mithin in die Sperrstellung der Vorrichtung. In der Sperrstellung können dann die nach unten aus dem Gehäuse 34 vorstehenden Eingriffsflächen 20 der Sperrzähne 16 in die zugeordneten Rastöffnungen 12 der Schiene 10 eingreifen und bei entsprechender Ausführung eine spielfreie Verriegelung vornehmen.

Bei der beschriebenen Bewegung der Sperrzähne 16 entgegen der Kraft der Druckfedern 36 durchfahren die Steuernocken 40 die Eingriffsöffnungen 26 des jeweils zugeordneten Federzungenpaares 24, wobei der Steuernocken 40 bei fortschreitender Bewegung in Anlage mit den Federenden 28 kommt und diese in axialer Richtung auseinanderdrückt. Dabei wird der Durchgriffsspalt 54 erweitert und die beiden Federenden 28 drücken dann kraftschlüssig auf den Steuernocken 40. Ist die angesprochene Betätigungsvorrichtung 18 mehrgliedrig ausgebildet und weist beispielsweise einzeln ansteuerbare Zinken für den jeweiligen Steuernocken 40 auf, läßt sich auch eine Einzelansteuerung der Sperrzähne 16 erreichen.

Bei einer anderen Ausführungsform der erfindungsgemäßen Verriegelungsvorrichtung nach den Fig.9a bis 9d kann auf die Federzungenpaare 24 als Rückhaltemittel und Fangeinrichtung 22 verzichtet werden. Vielmehr besteht hier die Fangeinrichtung 22 aus einem Fanghaken 30, der von dem Zinken 42 der Betätigungseinrichtung und einer Druckfeder 36 angesteuert zwischen einer gelösten Stellung, wie er in den Fig. 9a-ff dargestellt ist, in eine Verriegelungsstellung bewegbar ist, wobei in der Verriegelungsstellung der Sperrzahn 16 in einer noch wirksamen Verriegelungsstellung blockiert wird. Hierfür weist der jeweilige Sperrzahn 16 die bereits angesprochene Kanalführung 72 für den Fanghaken 30 auf, der über eine Bodenplatte 80 mit einem Steuerhaken 82 zusammenwirkt, der von den Zinken 42 der Betätigungseinrichtung 18 und einer Druckfeder 36 angesteuert den Fanghaken 30 in der beschriebenen Art bewegt.

Für die Anlage der Bodenplatte 80 mit dem Sperrzahn 16 ist diesmal eine geneigte Anlagefläche 64 notwendig, die in fiktiver Verlängerung mit der horizontal angeordneten Abschlußfläche 62 ebenfalls in fiktiver Verlängerung in einer Schnittlinie zusammentrifft. Die Bodenplatte 80 kann zum Umfassen der Anlagefläche 64 Vorsprünge 84 aufweisen. Auf der gegenüberliegenden Seite geht die Bodenplatte 80 nach einer Umlenkung um 90° in eine ebene Anlenkplatte 86 über, aus der wiederum der Fanghaken 30 sowie der Steuerhaken 82 ausgeformt sind. Vorzugsweise übergreift dabei der Steuerhaken 82 die Unterseite des Steuernockens 40 und durchgreift derart den Eingriffsraum 66.

Die Fig.9c und 9d zeigen den Sperrzahn während des Entriegelungsvorganges. Der Zinken 42 der Betätigungseinrichtung 18 drückt dabei die Lasche 82 unter Überwindung der Federkraft der Druckfeder 36 gegen den Steuernocken 40. Dadurch wird das Hakenteil des Fanghakens 30 außer Eingriff gebracht und der Sperrzahn 16 kann ausgehoben werden.

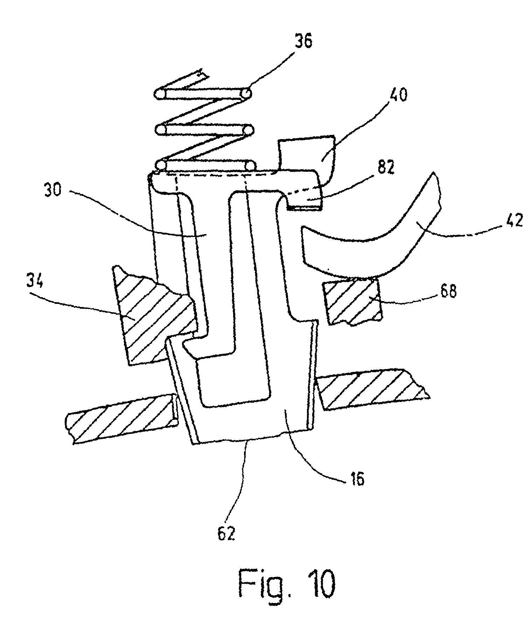

Die Fig.10 zeigt einen Sperrzahn 16 mit Fanghaken 30 in verriegeltem Zustand. Der Haken des Fanghakens 30 wird durch die Druckfeder 36 (80 kommt zur Anlage auf 64) in die Verriegelungsstellung gebracht. Wenn der Sperrzahn 16 nun unter Extrembeanspruchung versucht, auszuheben (auszusteuern), kommt der Haken des Fanghakens 30 unter einen Vorsprung im Bereich der Gehäuseunterkante zur Anlage. Somit wird dann der Sperrzahn 16 in einer wirksamen Verriegelungsstellung festgehalten.

Mit der erfindungsgemäßen Fangeinrichtung als Rückhaltemittel, die kraftund/oder formschlüssig auf den zugeordneten Sperrzahn einwirkt, ist mithin ein ungewolltes Außereingriffbringen des jeweiligen Sperrzahnes aus einer wirksamen Sperrstellung verhindert, indem rechtzeitig die Fangeinrichtung den jeweiligen Sperrzahn abfängt und in einer noch wirksamen Sperrstellung hält.

Somit ist auch gewährleistet, daß im Crashfall mit hochfrequenten Schwingungsanteilen sicher eine Verriegelung stattfindet, da die Sperrzähne bei einer etwaigen Aushebebewegung aus ihrer Verriegelungs- oder Sperrstellung derart eingefangen werden, daß sie noch verrasten können, wobei gleichzeitig in Richtung dieser Sperrstellung über die Fangeinrichtung eine zusätzliche Haltekraft ausgeübt werden kann. Unabhängig von der jeweiligen Eingriffssituation und mithin der Eingriffshöhe des jeweiligen Sperrzahnes oder Sperriegels ist ein verriegelnder Fangvorgang ermöglicht, so daß ein ungewollter Aushebevorgang des Sperrzahnes auch dann verhindert ist, wenn dieser im Gegensatz zum Stand der Technik nicht vollständig seine sperrende blockierende Endstellung erreicht hat.

## Patentansprüche

1. Verriegelungsvorrichtung für Fahrzeugsitze, insbesondere Kraftfahrzeugsitze, mit zwei relativ zueinander verstellbaren Teilen, mit einer dem einen Teil zugeordneten, sich in der Verstellrichtung erstreckenden Schiene (10), die mindestens eine sich in Schienenlängsrichtung erstreckende Reihe von Rastöffnungen (12) aufweist, die durch stegartige Materialpartien (14) voneinander getrennt sind, und mit dem anderen Teil zugeordneten Sperrzähnen (16), die quer zur Erstreckungsrichtung der Schiene (10) relativ zu dieser zwischen einer Freigabestellung und einer Sperrstellung beweglich sowie über eine Betätigungsvorrichtung (18) ansteuerbar sind und von denen in der Sperrstellung der relativ zueinander verstellbaren Teile mindestens einer in eine zugeordnete Rastöffnurig (12) eingreift, wobei mindestens ein Rückhaltemittel vorgesehen ist, das ein ungewolltes Außereingriffbringen des jeweiligen Sperrzahnes (16) aus einer wirksamen Sperrstellung verhindert und wobei das jeweilige Rückhaltemittel aus einer Fangeinrichtung (22) gebildet ist, die kraft- und/oder formschlüssig auf den zugeordneten Sperrzahn (16) einwirkt, **dadurch gekennzeichnet, daß** die Fangeinrichtung (22) aus einem Paar an Federzungen (24) gebildet ist, die eine Eingriffsöffnung (26) für den Sperrzahn (16) begrenzen und die mit ihren freien Federenden (28) für eine Anlage mit dem Sperrzahn (16) vorgesehen sind.

2. Verriegelungsvorrichtung für Fahrzeugsitze, insbesondere Kraftfahrzeugsitze, mit zwei relativ zueinander verstellbaren Teilen, mit einer dem einen Teil zugeordneten, sich in der Verstellrichtung erstreckenden Schiene (10), die mindestens eine sich in Schienenlängsrichtung erstreckende Reihe von Rastöffnungen (12) aufweist, die durch stegartige Materialpartien (14) voneinander getrennt sind, und mit dem anderen Teil zugeordneten Sperrzähnen (16), die quer zur Erstreckungsrichtung der Schiene (10) relativ zu dieser zwischen einer Freigabestellung und einer Sperrstellung beweglich sowie über eine Betätigungsvorrichtung (18) ansteuerbar sind und von denen in der Sperrstellung der relativ zueinander verstellbaren Teile mindestens einer in eine zugeordnete Rastöffnung (12) eingreift, wobei mindestens ein Rückhaltemittel vorgesehen ist, das ein ungewolltes Außereingriffbringen des jeweiligen Sperrzahnes (16) aus einer wirksamen Sperrstellung verhindert und wobei das jeweilige Rückhaltemittel aus einer Fangeinrichtung (22) gebildet ist, die kraft- und/oder formschlüssig auf den zugeordneten Sperrzahn (16) einwirkt, **dadurch gekennzeichnet, daß** die Fangeinrichtung (22) aus einem Fanghaken (30) gebildet ist, der von dem Zinken (42) der Betätigungseinrichtung (18) und der Druckfeder (36) angesteuert zwischen einer gelösten Stellung und einer Verriegelungsstellung bewegbar ist, bei der der Sperrzahn (16) in einer noch wirksamen Sperrstellung blockiert ist.

3. Verriegelungsvorrichtung nach Anspruch 1 oder 2, **dadurch gekennzeichnet, daß** die einzelnen Sperrzähne (16) mit einem axialen Abstand voneinander in Führungen (32) eines Gehäuses (34) geführt sind, die quer zur Schienenlängsrichtung verlaufen, und daß die Sperrzähne (16) über jeweils einen Federspeicher in Richtung ihrer Sperrstellung gehalten sind.

4. Verriegelungsvorrichtung nach Anspruch 3, **dadurch gekennzeichnet, daß** der Federspeicher eine Druckfeder (36) ist, die sich mit ihrem einen Ende an einem Deckblech (38) des Gehäuses (34) abstützt und mit ihrem anderen Ende an dem Sperrzahn (16).

5. Verriegelungsvorrichtung nach Anspruch 4, **dadurch gekennzeichnet, daß** das jeweilige Federzungenpaar (24) Teil des Deckbleches (38) und einstückig mit diesem verbunden ist.

6. Verriegelungsvorrichtung nach Anspruch 4, **dadurch gekennzeichnet, daß** der Sperrzahn (16) eine Kanalführung (72) für den Fanghaken (30) aufweist, der über eine Bodenplatte (80) mit einem Steuerhaken (82) zusammenwirkt, der von Zinken (42) der Betätigungseinrichtung (18) und einer Druckfeder (36) angesteuert den Fanghaken (30) bewegt.

7. Verriegelungsvorrichtung nach Anspruch 6, **dadurch gekennzeichnet, daß** für die Anlage der Bodenplatte (80) mit dem Sperrzahn (16) dieser eine geneigte Anlagefläche (64) aufweist.

8. Verriegelungsvorrichtung nach einem der Ansprüche 1 bis 7, **dadurch gekennzeichnet, daß** die Betätigungsvorrichtung (18) einen Steuerkamm (44) aufweist, dessen Zinken (42) direkt oder indirekt an Steuernocken (40) der Sperrzähne (16) angreifen.

## Claims

1. Locking device for vehicle seats, in particular motor vehicle seats, with two parts adjustable in relation to each other, with a rail (10) associated with one of the parts, extending in the direction of adjustment, which has at least one row of arresting holes (12) extending in the longitudinal direction of the rail, separated from each other by web-like portions of material (14), and locking teeth (16) associated with the other part, controllable across the direction in which the rail (10) extends, movable in relation to it between a release position and a locking position and by means of an operating mechanism (18), at least one of which engages in an associated locking aperture (12) in the locking position of the parts which are adjustable in relation to each other, whereby at least one retaining device prevents unintentional release of the respective locking tooth (16) from its effective locking position, the respective retaining device being formed by a catch device (22) acting with a positive force and/or grip on to the associated locking tooth (16), **characterised in that** the catch device (22) is formed by a pair of resilient tongues (24) delineating an engagement hole (26) for the locking tooth (16) and designed to contact the locking tooth (16) with their free resilient ends (28).

2. Locking device for vehicle seats, in particular motor vehicle seats, with two parts adjustable in relation to each other, with a rail (10) associated with one of the parts, extending in the direction of adjustment, which has at least one row of arresting holes (12) extending in the longitudinal direction of the rail, separated from each other by web-like portions of material (14), and locking teeth (16) associated with the other part, controllable across the direction in which the rail (10) extends, movable in relation to it between a release position and a locking position and by means of an operating mechanism (18), at least one of which engages in an associated locking aperture (12) in the locking position of the parts which are adjustable in relation to each other, whereby at least one retaining device prevents unintentional release of the respective locking tooth (16) from its effective locking position, the respective retaining device being formed by a catch device (22) acting with a positive force and/or grip on to the associated locking tooth (16), **characterised in that** the catch device (22) is formed of a catch hook (30) which, being controlled by the prong (42) of the operating mechanism (18) and the thrust spring (36), is movable between a released position and a locking position in which the locking tooth (16) is blocked in a locking position which is still effective.

3. Locking device according to Claim 1 or 2, **characterised in that** the individual locking teeth (16) move, axially spaced from each other, in guides (32) of a casing (34) extending across the longitudinal direction of the rail and **in that** each locking tooth (16) is held in a spring-force accumulator in the direction of its locking direction.

4. , Locking device according to Claim 3, **characterised in that** the spring-force accumulator is a thrust spring (36) supported with one of its ends at a cover plate (38) of the casing (34) and with its other end at the locking tooth (16).

5. Locking device according to Claim 4, **characterised in that** each pair of resilient tongues (24) is part of the cover plate (38) and connected in one piece with it.

6. Locking device according to Claim 4, **characterised in that** the locking tooth (16) has a guide channel (72) for the catch hook (30) which co-acts via a base plate (80) with a control hook (82) which, being controlled by the prongs (42) of the operating mechanism (18) and a thrust spring (36), moves the catch hook (30).

7. Locking device according to Claim 6, **characterised in that** the locking tooth (16) has an inclined contact face (64) for the base plate (80).

8. Locking device according to one of the Claims 1 to 7, **characterised in that** the operating mechanism (18) has a control head (44), the prongs (42) of which engage the control cams (40) of the locking teeth (16) directly or indirectly.

## Revendications

1. Dispositif de verrouillage pour des sièges de véhicules, en particulier des sièges de véhicules automobiles, avec deux parties pouvant être déplacées l'une par rapport à l'autre, avec un rail (10) attribué à l'une des parties, s'étendant dans la direction du déplacement et comprenant au moins une série d'ouvertures de crantage (12) se déployant dans le sens longitudinal du rail, qui sont séparées entre elles par des parties de matériau en forme de nervures (14), et avec des dents de verrouillage (16) attribuées à l'autre partie, qui sont mobiles dans le sens transversal à la direction d'extension du rail (10) par rapport à celui-ci et entre une position de libération et une position de verrouillage, qui peuvent être pilotées par un dispositif d'actionnement (18) et dont au moins une pénètre, dans la position de verrouillage des parties pouvant être déplacées l'une par rapport à l'autre, dans une ouverture de crantage correspondante (12), au moins un élément de retenue, qui évite tout dégagement inopiné de la dent de verrouillage respective (16) hors d'une position de verrouillage active, étant prévu et l'élément de retenue respectif étant constitué d'un dispositif d'arrêt (22), qui agit par adhérence et/ou en complémentarité de forme sur la dent de verrouillage correspondante (16), **caractérisé en ce que** le dispositif d'arrêt (22) est formé d'une paire de languettes élastiques (24), qui délimitent une ouverture d'engagement (26) pour la dent de verrouillage (16) et dont les extrémités libres élastiques (28) sont prévues pour un contact avec la dent de verrouillage (16).

2. Dispositif de verrouillage pour des sièges de véhicules, en particulier des sièges de véhicules automobiles, avec deux parties pouvant être déplacées l'une par rapport à l'autre, avec un rail (10) attribué à l'une des parties, s'étendant dans la direction du déplacement et comprenant au moins une série d'ouvertures de crantage (12) se déployant dans le sens longitudinal du rail, qui sont séparées entre elles par des parties de matériau en forme de nervures (14), et avec des dents de verrouillage (16) attribuées à l'autre partie, qui sont mobiles dans le sens transversal à la direction d'extension du rail (10) par rapport à celui-ci et entre une position de libération et une position de verrouillage, qui peuvent être pilotées par un dispositif d'actionnement (18) et dont au moins une pénètre, dans la position de verrouillage des parties pouvant être déplacées l'une par rapport à l'autre, dans une ouverture de crantage correspondante (12), au moins un élément de retenue, qui évite tout dégagement inopiné de la dent de verrouillage respective (16) hors d'une position de verrouillage active, étant prévu et l'élément de retenue respectif étant constitué d'un dispositif d'arrêt (22), qui agit par adhérence et/ou en complémentarité de forme sur la dent de verrouillage correspondante (16), **caractérisé en ce que** le dispositif d'arrêt (22) est formé par un crochet d"arrêt (30) qui, sous l'effet d'une commande par la fourche (42) du dispositif d'actionnement (18) et par le ressort de compression (36), est mobile entre une position de libération et une position de verrouillage, dans laquelle la dent de verrouillage (16) est bloquée dans une position de verrouillage encore active.

3. Dispositif de verrouillage selon la revendication 1 ou 2, **caractérisé en ce que** les différentes dents de verrouillage (16) sont guidées avec un espacement axial entre elles dans des guides (32) d'un boîtier (34), qui s'étendent transversalement à la direction longitudinale du rail et **en ce que** les dents de verrouillage (16) sont maintenues dans le sens de leur position de verrouillage par respectivement un accumulateur à ressorts.

4. Dispositif de verrouillage selon la revendication 3,. **caractérisé en ce que** l'accumulateur à ressorts est un ressort de compression (36), dont l'une des extrémités s'appuie sur une tôle de recouvrement (38) du boîtier (34) et l'autre extrémité s'appuie sur la dent de verrouillage (16).

5. Dispositif de verrouillage selon la revendication 4, **caractérisé en ce que** la paire de languettes élastiques respective (24) est une partie constituante de la tôle de recouvrement (38) et est reliée d'une seule pièce avec celle-ci.

6. Dispositif de verrouillage selon la revendication 4, **caractérisé, en ce que** la dent de verrouillage (16) comprend un guide en forme de canal (72) pour le crochet d'arrêt (30) qui, par l'intermédiaire d'une plaque de fond (80), agit de concert avec un crochet de commande (82) lequel, sous l'effet d'une commande par la fourche (42) du dispositif d'actionnement (18) et par un ressort de compression (36), déplace le crochet d'arrêt (30).

7. Dispositif de verrouillage selon la revendication 6, **caractérisé en ce que**, pour l'appui de la plaque de fond (80) avec la dent de verrouillage (16), celle-ci est munie d'une surface d'appui inclinée (64).

8. Dispositif de verrouillage selon l'une des revendications 1 à 7, **caractérisé en ce que** le dispositif d'actionnement (18) est muni d'une came de commande (44), dont la fourche (42) agit directement ou indirectement sur des saillies de commande (40) des dents de verrouillage (16).
